# EUROPEAN PATENT APPLICATION

(11) **EP 1 583 056 A2**
(43) Date of publication of application: **05.10.2005**
(21) Application number: 05251741.4
(22) Date of filing: 22.03.2005
(51) Int. Cl.: G08C 17/00

(54) **Identification system with an active and a passive transponder**

(30) Priority: 27.03.2004 DE 102004015168
(71) Applicant: Dräger Safety AG & Co KGaA, 23560 Lübeck (DE)
(72) Inventor: Seemann, Günter, 23923 Palingen (DE)
(74) Representative: Greenwood, John David

(57) **Abstract**

A personal identification system with active and passive transponders is to be improved in such a way that different transponder designs can be combined in a simple manner. The solution to the problem takes place by means of a slide-in compartment (15) on the active transponder (4), which is designed to accommodate an identity card (16) with a passive transponder (17) for personal data.

## Description

In health and safety facilities, an attempt is made to reduce risks by the fact that certain areas are accessible solely to a selected group of people. For this purpose, these people are provided with a responder in the form of an active transponder, which itself can in turn be responded to by a reporting device. These transponders are attached to the articles of clothing or items of equipment of the people. Such active transponders are used where fairly large distances have to be bridged.

A device of the type mentioned has become known from DE 33 21 790 A1.

For operational access control and for the recording of attendance and absence times, card-type data carriers are known that have a non-contact readable passive transponder as a memory for personal data. This card-type data carrier is normally provided with a photograph of the person and has to be wom on the outside of clothing so as to be visible. In order to record the attendance time, the identity card is inserted into a reading device and an input key is also operated, by means of which the person indicates whether he/she is coming or going.

A device for operational access control and time recording has become known from DE 102 08 647 A1.

In complex operational facilities, the situation arises where people have to carry with them both an active transponder as well as an identity card to be wom visibly. Since it involves two independent systems, people must attach both the active transponder and the identity card separately to their clothing. The separation of the identity card from other information systems is partially also connected with the fact that it is forbidden by law in certain countries to link personal data on identity cards with the data of other systems.

The problem underlying the invention is to provide a device with which different transponder designs can be combined in a simple manner in a personal identification system.

The present invention is as claimed in claim 1.

The advantage of the invention essentially consists in the fact that the active transponder has a slide-in compartment for a personal identity card, which is designed such that the identity card can easily be removed and inserted into a respective reading device. The slide-in compartment may have a cover of a transparent material, so that the identity card can be seen through the material.

The slide-in compartment, which is preferably designed as a plastic.injection-moulded part, has on its rear side a receiving compartment for the board of the active transponder. In this way, the protective housing for the active transponder can be combined in a particularly straightforward manner with the slide-in compartment for the identity card, without additional components being required.

The slide-in compartment is expediently provided with an attachment clip for the fixing to the person's clothing.

Advantageously, the active transponder may be part of a position locating system, whereby, in connection with a personal recognition, a position coordinate is transmitted to a receiving point.

An example of embodiment of the invention is shown in the accompanying figures and explained in greater detail below.
Figure 1 is a diagrammatic representation of a position locating system for a health and safety facility with an active transponder;
Figure 2 is a diagrammatic plan view of an active transponder with a slide-in compartment for an identity card; and
Figure 3 is a diagrammatic side view of the slide-in compartment according to figure 2 in a direction of view in slide-in direction "E" of Figure 1.

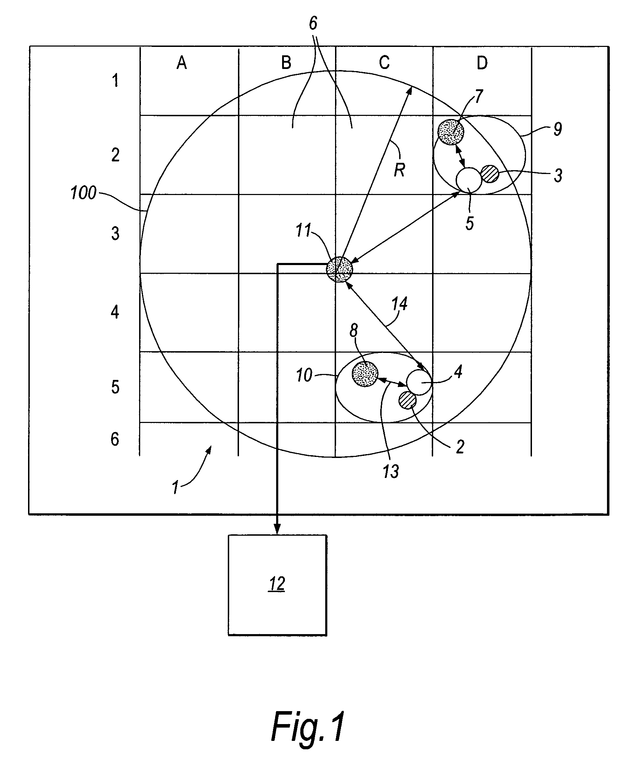

Figure 1 illustrates diagrammatically a position locating system in a health and safety facility 100 for persons 2, 3 not shown in detail in figure 1, said persons being provided with active transponders 4, 5. The monitoring area of health and safety facility 100 extends over a radius of R = 50 m, whereby the area is divided into individual rectangular segments 6. The position of segments 6 can be indicated from the combination of letters A to D on the abscissa and numbers 1 to 6 on the ordinate.

A first position mark 7 is illustrated by way of example in segment 6 "D 2" and a second position mark 8 in segment "C 5". Remaining segments 6 are also provided with position marks, which are not represented in figure 1 for the sake of better clarity. Each of position marks 7, 8 has a ground loop 9, 10, which extends over segment "D 2" and segment "C 5" respectively. Position coordinates for the whole area can be indicated by position marks and respective ground loops in adjoining fields.

Position marks 7, 8 emit permanently encoded position coordinates. If active transponder 4 comes into the area of ground loop 10 of position mark 8, it is activated by the carrier frequency emitted over ground loop 10 and receives the position coordinate of position mark 8. This position coordinate is transmitted together with an individual code of person 2 to a central receiving point 11, which is connected to a central computing and evaluating unit 12. The data communication for position mark 8 and transponder 4 is illustrated by arrows 13, 14. The codes for persons 2, 3 are permanently programmed into respective transponders 4, 5, so that information concerning the instantaneous positions of persons 2, 3 is available in computing and evaluating unit 12 at all times with the aid of the position coordinates of position marks 7, 8.

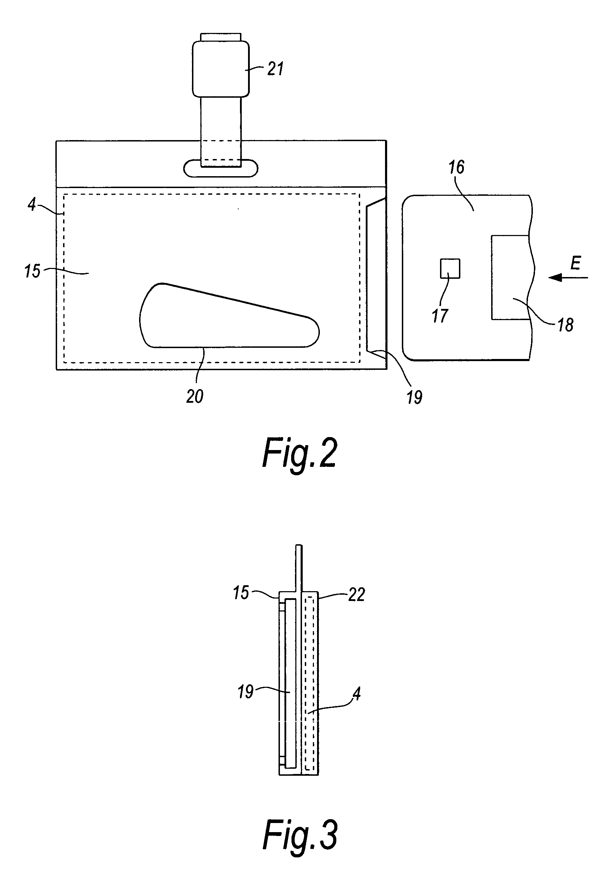

Figure 2 shows, by way of example for active transponder 4, a slide-in compartment 15 for a personal identity card 16 of person 2. Identity card 16, which contains a passive transponder 17 with personal data as well as a photograph 18, is inserted in slide-in direction "E" into a slot 19 of slide-in compartment 15. Slide-in compartment 15 has on its front side a reach-through opening 20, with which identity card 16 can be pushed out of slot 19 in order to place it onto a reading device (not shown) of a time recording device. The reading device records when the person has entered health and safety facility 100 or left it again. At the upper side of slide-in compartment 15 is an attachment clip 21, with which active transponder 4 together with identity card 16 can be fixed to the clothing of person 2. In terms of dimensions, the board of active transponder 4 is designed such that it has roughly the external dimensions of identity card 16.

Figure 3 shows a side view of slide-in compartment 15 with a view in slide-in direction "E" according to figure 2. Identical components are indicated with the same reference numbers of figure 2. In the example of embodiment shown, active transponder 4 is accommodated in a receiving compartment 22 on the rear side of slide-in compartment 15. Receiving compartment 22 can be connected by means of a snap connection to slide-in compartment 15, in order that receiving compartment 22 together with the transponder can be removed from slide-in compartment 15 in order to replace the battery of active transponder 4.

## Claims

1. A device with
an active transponder (4) for a health and safety facility (100),
a passive transponder (17) with personal data on an identity card (16),
a slide-in compartment (15) connected to the active transponder (4), said slide-in compartment being designed to accommodate the identity card (16).

2. The device according to claim 1, in which the slide-in compartment (15) has on its rear side a receiving compartment (22) for fitting the active transponder (4).

3. The device according to claim 1 or 2, in which the slide-in compartment (15) is provided with an attachment clip (21).

4. The device according to any one of claims 1 to 3, in which the active transponder (4) is part of a position locating system for a person (2), and in connection with a person recognition transmits a position coordinate to a receiving point (11).
